# DEMANDE DE BREVET EUROPEEN

(11) **EP 1 527 986 A2**
(43) Date de publication de la demande: **04.05.2005**
(21) Numéro de dépôt: 04292490.2
(22) Date de dépôt: 20.10.2004
(51) Int. Cl.: B62H 5/00

(54) **Dispositif de cadenas à lien articulé pour vehicule à deux roues**

(30) Priorité: 20.10.2003 ES 200302384
(71) Demandeur: Luma Industrias, S.A., 20120 Hernani (Guipuzcoa) (ES)
(72) Inventeur: Muerza Alfredo, 20120 Hernani Guipuzcoa (ES)
(74) Mandataire: Intès, Didier Gérard André

(57) **Abrégé**

Dispositif de cadenas à lien articulé pour véhicules à deux roues, comprenant une boucle articulée (1) qui à ses extrémités possède des moyens de fermeture praticable (2) et qui est constituée par un noyau (3) de câble en acier qui est inséré à travers une pluralité de pièces de cuirassement, ou cuirasses (4), qui sont accouplées successivement, ainsi que par une enveloppe (5) en plastique flexible et continue qui est ajustée sur ladite pluralité de cuirasses (4) à des fins de protection et d'esthétique, caractérisé en ce que, indépendamment de ladite enveloppe (5) flexible et continue, chacune desdites cuirasses (4) incorpore de manière périphérique une chemise (6) qui est de nature plastique avec une certaine élasticité et qui a une importante charge de poudre hautement abrasive, et en ce que les cuirasses (4) ont une géométrie constituée par un corps cylindrique qui à une extrémité se termine en se rétrécissant par un chapeau de forme approximativement sphérique et à l'extrémité opposée forme, en s'évasant, une jupe dont l'intérieur a approximativement la forme d'un chapeau sphérique de rayon égal à celui de l'extérieur dudit chapeau, ledit corps cylindrique ayant une longueur nettement supérieure à celle dudit chapeau et de ladite jupe.

## Description

### DOMAINE DE L'INVENTION

La présente invention concerne un dispositif de cadenas à lien articulé, du type de ceux destinés à réaliser une fonction antivol pour les bicyclettes et les motocyclettes, que ce soit en produisant l'immobilisation d'une roue par rapport au châssis du véhicule, ou en fixant la roue ou le châssis de celui-ci par rapport à un élément externe à celui-ci (poteau, construction, ...).

En particulier, le dispositif proposé est destiné à constituer un lien à performances antivol élevées.

### ETAT DE LA TECHNIQUE

Un cadenas antivol à lien articulé répond en général à une constitution qui comprend une boucle articulée qui à ses extrémités possède des moyens de fermeture praticables et qui est constituée par un noyau de câble en acier qui est inséré à travers une pluralité de pièces de cuirassement, ou cuirasses, qui sont accouplées successivement, ainsi que par une enveloppe en plastique flexible et continue qui est ajustée sur ladite pluralité de cuirasses à des fins de protection et d'esthétique.

On connaît de nombreux dispositifs répondant à cette réalisation générale qui se différencient par la configuration du cuirassement pour le noyau de câble en acier. On sait que ce cuirassement est constitué par l'accouplement successif d'une seule configuration de pièce en forme de cloche tronconique qui a une extrémité arrondie et l'autre extrémité avec une petite lèvre d'élargissement où s'accouple de manière articulée l'extrémité arrondie de l'autre pièce similaire du cuirassement, ce qui a lieu avec une petite pénétration de la deuxième dans la première ; du côté de l'extrémité arrondie il peut exister une courte prolongation de largeur nettement moindre qui fonctionne comme douille-guide du noyau de câble en acier.

Cette réalisation ne respecte pas les spécifications d'homologation correspondant aux catégories les plus exigeantes, parce qu'elle est vulnérable aux méthodes de violation basées sur l'utilisation de cisailles ou de scies. Ceci est dû au fait qu'en plaçant habituellement les cisailles entre les deux rotules, on arrive à atteindre la partie courbée sphérique, ce qui favorise le calage de séparation des rotules et permet d'atteindre le câble avec les cisailles. La même chose se produit dans les liens qui possèdent des pièces accouplées en sphère et en tube.

### EXPLICATION DE L'INVENTION ET AVANTAGES

Face à cet état de choses, la présente invention propose un cadenas à lien articulé dans lequel, indépendamment de ladite enveloppe flexible et continue, chacune desdites cuirasses comprend en périphérie une chemise qui est de nature plastique ayant une certaine élasticité et qui a une importante charge de poudre hautement abrasive, et dont les cuirasses ont une géométrie constituée par un corps cylindrique qui à une extrémité se termine en se rétrécissant via un chapeau de forme approximativement sphérique et à l'extrémité opposée forme, en s'évasant, une jupe dont l'intérieur a approximativement la forme d'un chapeau sphérique de rayon égal à celui de l'extérieur du chapeau, ledit corps cylindrique ayant une longueur nettement supérieure à celle desdits chapeau et jupe.

Dans la réalisation proposée, la chemise plastique et hautement abrasive a une double fonction : d'une part, en raison de son fort pouvoir abrasif, elle détruit le fil d'une scie qui tenterait de la scier ; d'autre part, son élasticité implique une défense très efficace contre les tentatives de violation par un procédé de martelage.

A ces qualités avantageuses, il convient d'ajouter celles découlant de la configuration géométrique particulière de la cuirasse proposée. De telle façon que, à la différence des dispositifs connus dans ce domaine, maintenant les cuirasses offrent à l'extérieur un côté cylindrique qui est droit (n'a pas de conicité) et qui s'étend sur la majeure partie de la longueur de la cuirasse avec une grosseur inférieure à celle-ci, c'est-à-dire, avec la grosseur à laquelle commence le chapeau qui s'articule à l'intérieur de la jupe d'une cuirasse suivante et qui, en même temps, constitue un guide pour le noyau de câble en acier ; de plus, la longueur de la jupe est le double de celle du chapeau, ce qui permet une considérable pénétration dans l'articulation de pièces successives, de même que la jupe peut accueillir également la partie fine de la chemise correspondant à la cuirasse qui s'articule au sein de ladite jupe. Avec tout cela, le dispositif proposé est apte à respecter les normes d'homologation établies pour les cadenas à lien articulé à hautes performances.

Des caractéristiques particulières et d'autres de la présente invention ressortiront plus clairement à la lecture de la description détaillée suivante.

### DESSINS ET REFERENCES

Pour mieux comprendre la nature de la présente invention, sur les dessins annexés, nous représentons un mode de réalisation préféré, à titre d'exemple simplement illustratif et non pas limitatif.

La figure 1 est une vue en coupe longitudinale correspondant à une cuirasse (4) selon l'invention.

La figure 2 montre un état ouvert d'un cadenas à lien articulé constitué de cuirasses (4) selon la figure 1.

La figure 3 est une vue agrandie du détail III, entouré sur la figure 2.

Sur ces figures, les références suivantes sont indiquées :
1.- Boucle articulée
2.- Fermeture praticable
3.- Noyau de câble en acier
4.- Cuirasse
5.- Enveloppe flexible
6.- Chemise de cuirasse (4)
7.- Corps cylindrique de cuirasse (4)
8.- Chapeau de cuirasse (4)
9.- Jupe de cuirasse (4)
10.- Partie grosse de chemise (6)
11.- Partie fine de chemise (6)
12.- Retrait de partie fine (11)
13.- Frange annulaire de jupe (9)

### PRESENTATION D'UN MODE DE REALISATION PREFERE

En référence aux dessins et aux références susmentionnées, il est représenté sur les figures annexées un mode de réalisation préféré de l'invention, concernant un dispositif constitutif d'un cadenas à lien articulé du type de ceux comprenant en général une boucle articulée (1) qui à ses extrémités possède des moyens de fermeture praticable (2) et qui est constituée par un noyau (3) de câble en acier qui est inséré à travers une pluralité de pièces de cuirassement, ou cuirasses (4), qui sont accouplées successivement, ainsi que par une enveloppe (5) en plastique flexible et continue qui est ajustée sur ladite pluralité de cuirasses (4) à des fins de protection et d'esthétique.

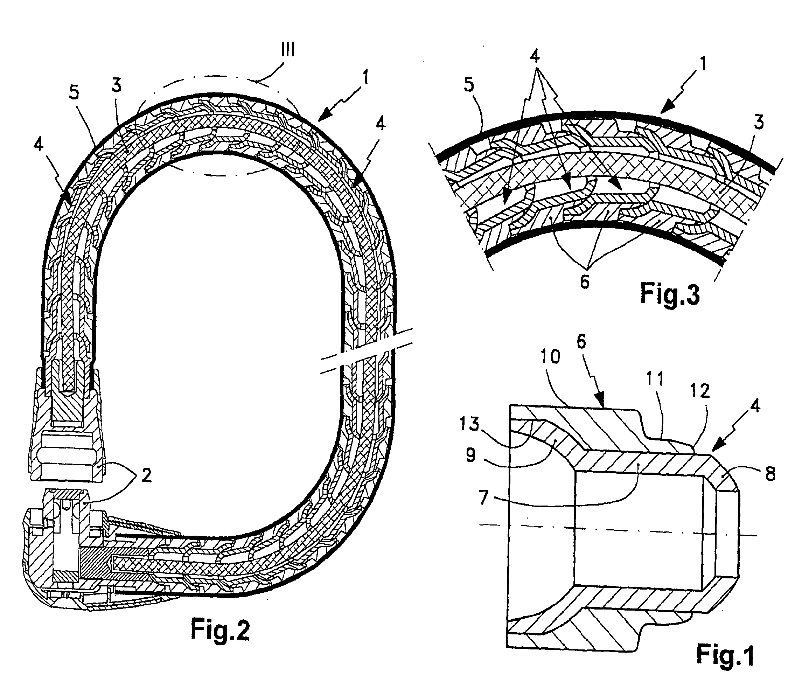

Comme le montre la figure 1, l'objet de l'invention est que, indépendamment de ladite enveloppe (5) flexible et continue, chacune desdites cuirasses (4) incorpore de manière périphérique une chemise (6) qui est de nature plastique avec une certaine élasticité et qui a une importante charge de poudre hautement abrasive, et que les cuirasses (4) ont une géométrie constituée par un corps cylindrique (7) qui à une extrémité se termine en diminution par un chapeau (8) de forme approximativement sphérique et à l'extrémité opposée forme en évasement une jupe (9) dont l'intérieur a approximativement la forme d'un chapeau sphérique de rayon égal à celui de l'extérieur du chapeau (8), ledit corps cylindrique (7) ayant une longueur nettement supérieure à celle dudit chapeau (8) et de ladite jupe (9).

Conformément à l'invention (figure 1), la chemise (6) s'étend du bord de ladite jupe (9) jusqu'à un lieu précédant de manière pratique le début dudit chapeau (8) ; de même, cette chemise (6) a une configuration cylindrique échelonnée constituée par une partie grosse (10) et une partie fine (11), la partie grosse (10) s'étend du bord de ladite jupe (9) vers approximativement la moitié dudit corps cylindrique (7) de la cuirasse (4) et la partie fine (11) s'étend de ce dernier endroit jusqu'à la fin proche dudit début du chapeau (8) ; également selon l'invention, cette partie fine (11) de la chemise (6) a à son extrémité un retrait (12) en forme de chanfrein ou arrondi qui est inscrit dans le prolongement de la superficie du chapeau (8).

Avec tout cela, ladite chemise (6) protège la cuirasse (4) face aux éventuelles tentatives de sciage, via l'annulation du mordant du fil de la scie par l'action abrasive efficace inhérente à celle-ci ; elle la protège également face aux tentatives de violation par martelage, au moyen de sa propre élasticité.

En rapport avec l'existence de la chemise (6), la présente invention propose une géométrie particulière des cuirasses (4) consistant en ce que le corps cylindrique (7) des cuirasses (4) a une longueur sensiblement égale au double de la longueur axiale de la jupe (9) et au quadruple de la longueur axiale du chapeau (8). Cette géométrie est clairement montrée sur la figure 1 et a la particularité d'offrir à l'attaque de violation un flanc cylindrique, et par conséquent droit (pas conique), qui ne favorise pas l'action des cisailles ou de la scie pour atteindre le noyau de câble en acier. En outre, à l'état opérationnel, le corps cylindrique (7) et la jupe (9) sont recouverts par la chemise (6), comme montré sur la figure 3. De plus, également sur la figure 3, on remarque comment le retrait (12) de la partie fine (11) de la chemise (6) est accueilli au sein de la jupe (9) y compris sur le côté externe de courbure maximale de la boucle articulée (1) représentée sur la figure 2, comme exemple d'application du dispositif proposé.

Une autre particularité de l'invention consiste en ce que la jupe (9) a extérieurement, à partir de son extrémité, une frange annulaire cylindrique (13).

Quant à la mise en place de la chemise (6), l'invention prévoit deux solutions préférées, l'une selon laquelle la chemise (6) est surmoulée sur la cuirasse (4) et l'autre, selon laquelle la chemise (6) est accouplée par pression sur la cuirasse (4).

## Revendications

1. Dispositif de cadenas à lien articulé pour véhicules à deux roues, comprenant une boucle articulée (1) qui à ses extrémités possède des moyens de fermeture praticable (2) et qui est constituée par un noyau (3) de câble en acier qui est inséré à travers une pluralité de pièces de cuirassement, ou cuirasses (4), qui sont accouplées successivement, ainsi que par une enveloppe (5) en plastique flexible et continue qui est ajustée sur ladite pluralité de cuirasses (4) à des fins de protection et d'esthétique, **caractérisé en ce que**, indépendamment de ladite enveloppe (5) flexible et continue, chacune desdites cuirasses (4) incorpore de manière périphérique une chemise (6) qui est de nature plastique avec une certaine élasticité et qui a une importante charge de poudre hautement abrasive, et **en ce que** les cuirasses (4) ont une géométrie constituée par un corps cylindrique (7) qui à une extrémité se termine en se rétrécissant par un chapeau (8) de forme approximativement sphérique et à l'extrémité opposée forme, en s'évasant, une jupe (9) dont l'intérieur a approximativement la forme d'un chapeau sphérique de rayon égal à celui de l'extérieur dudit chapeau (8), ledit corps cylindrique (7) ayant une longueur nettement supérieure à celle dudit chapeau (8) et de ladite jupe (9).

2. Dispositif de cadenas à lien articulé pour véhicules à deux roues, selon la revendication précédente, **caractérisé en ce que** ladite chemise (6) s'étend du bord de ladite jupe (9) jusqu'à un lieu précédant de manière pratique le début dudit chapeau (8).

3. Dispositif de cadenas à lien articulé pour véhicules à deux roues, selon les revendications précédentes, **caractérisé en ce que** ladite chemise (6) a une configuration cylindrique échelonnée constituée par une partie grosse (10) et une partie fine (11), la partie grosse (10) s'étend du bord de ladite jupe (9) vers approximativement la moitié dudit corps cylindrique (7) de la cuirasse (4) et la partie fine (11) s'étend de ce dernier endroit jusqu'à la fin proche dudit début du chapeau (8).

4. Dispositif de cadenas à lien articulé pour véhicules à deux roues, selon les revendications précédentes, **caractérisé en ce que** ladite partie fine (11) de la chemise (6) a à son extrémité un retrait (12) arrondi ou en forme de chanfrein, qui est inscrit dans le prolongement de la superficie du chapeau (8).

5. Dispositif de cadenas à lien articulé pour véhicules à deux roues, selon les revendications précédentes, **caractérisé en ce que** ledit corps cylindrique (7) des cuirasses (4) a une longueur sensiblement égale au double de la longueur axiale de la jupe (9) et au quadruple de la longueur axiale dudit chapeau (8).

6. Dispositif de cadenas à lien articulé pour véhicules à deux roues, selon les revendications précédentes, **caractérisé en ce que** ladite chemise (6) est surmoulée dans la cuirasse (4).

7. Dispositif de cadenas à lien articulé pour véhicules à deux roues, selon les revendications précédentes, **caractérisé en ce que** ladite chemise (6) est accouplée sous pression sur la cuirasse (4).

8. Dispositif de cadenas à lien articulé pour véhicules à deux roues, selon les revendications précédentes, **caractérisé en ce que** ladite jupe (9) a extérieurement à partir de son extrémité une frange annulaire cylindrique (13).
